# FASCICULE DE BREVET EUROPEEN

(11) **EP 2 120 119 B1**
(45) Date de publication et mention de la délivrance du brevet: **10.11.2010**
(21) Numéro de dépôt: 09160254.0
(22) Date de dépôt: 14.05.2009
(51) Int. Cl.: G05B 19/042, E06B 9/322, E06B 9/68

(54) **Procédés de configuration et de commande groupée d'écrans motorisés**
Konfigurations- und Steuerverfahren für motorbetriebene Schutzschirme
Grouped control and configuration methods for motorised blinds

(30) Priorité: 15.05.2008 FR 0853148
(43) Date de publication de la demande: 18.11.2009
(73) Titulaire: Somfy SAS, 74300 Cluses (FR)
(72) Inventeur: Cieslik, Franck, 38300 Succieu (FR)
(74) Mandataire: Myon, Gérard Jean-Pierre

(56) Documents cités:
- EP-A- 0 913 748
- JP-A- 8 210 054
- US-A- 4 688 895

## Description

La présente invention concerne un procédé de configuration et de commande groupée de plusieurs écrans motorisés équipés d'une barre de charge. Ces écrans peuvent être des stores vénitiens ou autres stores analogues. Ce type d'écrans comprend au moins un cordon de levage, relié à la barre de charge, s'enroulant autour d'un arbre entraîné en rotation par un actionneur. Les écrans peuvent également être des stores toiles enroulables, voire des volets roulants. Dans tous les cas, il est nécessaire que la mesure de la position de la barre de charge d'un écran soit la plus indépendante possible de la position de l'écran.

Pour piloter plusieurs écrans motorisés, il est connu d'utiliser un automatisme permettant de gérer la position et/ou l'orientation des lames des écrans constitutifs du groupe de manière à ce que chaque écran ait la même position et/ou orientation de lames suite à une commande groupée. Le pilotage est généralement assuré par un fonctionnement de type « maître-esclaves » où un écran, dit « maître », pilote les autres écrans dits « esclaves » du groupe. Les écrans esclaves reproduisent la configuration, c'est à dire, la position et/ou l'orientation des lames de l'écran maître, comme décrit dans la demande JP-A-08210054. Comme le précise EP-A-0913748, l'ajustement de la position et/ou de l'orientation des lames d'un écran peut être obtenu par le calcul d'impulsions moteur ou temporelles au moyen d'un microprocesseur. Une correspondance entre ces impulsions et la position de l'écran ou l'orientation des lames peut être définie directement.

Dans les demandes précédentes, tous les écrans ont sensiblement la même course et sont alignés. La course d'un écran est déterminée par la distance parcourue par la barre de charge entre une première et une deuxième position prédéterminées. La première position, appelée fin de course haute, correspond généralement à une position de la barre de charge pour laquelle l'écran est complètement ouvert. La barre de charge atteint alors une butée haute. Cette butée haute est une position d'arrêt souhaitée par l'utilisateur. Elle peut être différente d'une butée de recalage destinée à resynchroniser un moyen de comptage avec la course effective de l'écran en cas de dérive du moyen de comptage. La deuxième position, appelée fin de course basse, correspond à une position de la barre de charge telle que l'écran est complètement fermé. La barre de charge atteint alors une butée basse. Lorsque les écrans sont alignés, ils ont généralement les mêmes fins de course hautes.

La mesure de position de la barre de charge d'un écran est obtenue par rapport à une position de référence prédéterminée. Par ailleurs, il peut être prévu une opération de calibrage permettant de définir une même position de référence pour les écrans du groupe après l'installation. Cette position de référence est décrite comme une position spécifique commune correspondant à toutes les fins de course hautes des écrans du groupe. Ainsi, lorsqu'un ordre de déplacement des barres de charge vers une position souhaitée de la course d'un écran est exécuté, chaque barre de charge des écrans du groupe se déplace vers cette position définie par rapport à la fin de course haute de chaque écran correspondant à la position de référence commune. A la fin de la manoeuvre, toutes les barres de charge se situent à la même position et sont alignées.

De telles solutions ne permettent pas d'obtenir un alignement des barres de charges lorsque les écrans ont des courses différentes et plus particulièrement lorsqu'une fin de course haute n'est pas à la même position que celles des autres écrans du groupe. Dans ce cas, la barre de charge d'un écran dit « décalé », ayant une position de référence correspondant à sa fin de course haute, différente des autres fins de course hautes, ne peut pas atteindre une position pour laquelle elle peut être alignée avec les autres barres de charge du groupe. Le décalage obtenu correspond à la différence des positions de référence. Les procédés de commande groupée actuels ne sont pas conçus pour intégrer cet écart. Un écran du groupe est piloté à partir de sa position de référence intrinsèque qui n'est pas liée aux positions de référence des autres écrans du groupe. De même, il n'est pas prévu de régler la position de référence intrinsèque d'un écran en tenant compte des écrans du groupe ayant des fins de course ou butées de recalage différentes.

L'invention propose un procédé de configuration de plusieurs écrans palliant les inconvénients précédents.

A cet effet, l'invention concerne un procédé de configuration d'un groupe d'écrans motorisés dont chacun comprend une barre de charge qui se déplace selon une course définie. Ce procédé est **caractérisé en ce qu**'il comprend une étape consistant à déterminer, pour chaque écran du groupe, un paramètre de décalage entre une première position de référence de l'écran et une deuxième position de référence, une de ces deux positions de référence étant une position de référence commune aux écrans de ce groupe d'écran.

Grâce à l'invention, le procédé permet de régler les écrans d'un groupe, incluant des écrans décalés, afin de pouvoir obtenir, à l'arrêt, au moins l'alignement des barres de charges des écrans qui ont été déplacées suite à une commande. Le paramètre de décalage déterminé grâce au procédé de l'invention peut être directement pris en compte pour l'alignement des barres de charge. Ce procédé dépend du mode de pilotage retenu pour commander le groupe. Pour maîtriser la position d'une barre de charge d'un écran, celui-ci dispose d'un moyen de comptage mesurant la position de la barre de charge par rapport à une position de référence intrinsèque à l'écran. La position de référence correspond à une position particulière de la barre de charge. Avantageusement, la position de chaque écran du groupe est déterminée de la même façon, par des moyens de comptage identiques. Ainsi, les incréments entre deux positions sont identiques. Le positionnement relatif d'une barre de charge par rapport à une autre est plus précis. L'alignement est alors plus facile à obtenir.

Le paramètre de décalage issu du procédé de configuration des écrans du groupe présente également l'avantage de faciliter l'exécution d'un ordre de rejoindre une position intermédiaire prédéfinie. La position intermédiaire est définie par rapport à un écran maître du groupe. Pour obtenir l'alignement des barres de charge des autres écrans à cette position, il faut retranscrire cette position dans le repère lié à chaque écran. Les différents paramètres de décalage sont directement liés à cette retranscription.

Ces paramètres correspondent préférentiellement à une variation de longueur ou de course, précise et stable, ou à un temps de manoeuvre. Ces paramètres peuvent être enregistrés par des procédés simples suite à un positionnement particulier d'un ou plusieurs écrans.

De façon avantageuse, chaque écran du groupe d'écran est couplé par un moyen de comptage qui définit la position relative de la barre de charge de cet écran par rapport à la première position de référence, qui est propre à l'écran, ou par rapport à la deuxième position de référence.

La deuxième position de référence peut être une position de recalage du moyen de comptage propre à chaque écran, alors que la première position de référence est une position de référence commune au groupe d'écrans.

En variante, la deuxième position de référence est une position de référence commune au groupe d'écrans. Dans ce cas, la première position de référence d'un écran à configurer peut être une position de fin de course de cet écran.

L'invention est illustrée à travers deux modes de pilotage.

Un premier mode de pilotage consiste à dissocier la position de référence, propre ou intrinsèque à un écran, de la position de fin de course haute de ce même écran. Le paramètre de décalage permet de définir cette position de référence intrinsèque indépendamment de la fin de course haute. Il est alors possible d'obtenir une position de référence commune à tous les écrans du groupe. Le pilotage devient simple et direct puisque le référentiel pour manoeuvrer un écran est commun aux autres écrans. La position à atteindre est la même pour tous les écrans.

Un deuxième mode de pilotage consiste à ce que la position de référence et la fin de course haute d'un écran soient les mêmes. Dans ce cas, lorsque la position de référence d'un écran décalé est différente de celle de l'écran maître, cet écart est intégré pour le pilotage de l'écran décalé. Le paramètre de décalage correspond à la différence de position entre la position de référence d'un écran et une position de référence commune. Le pilotage des écrans décalés n'est pas direct puisqu'il faut corriger la position à atteindre liée à l'écran maître par le paramètre de décalage. Cette correction doit être effectuée à chaque manoeuvre.

Ces deux modes de pilotage permettent ainsi de prendre en compte le décalage des écrans. Ils permettent donc d'être indépendant de l'installation des écrans. L'alignement des barres de charge est toujours assuré et précis, même si l'installation comprend des écrans de courses différentes dues à un positionnement différent ou à un linteau technique. L'alignement des barres de charge est d'une part esthétique mais permet également une meilleure maîtrise de l'ensoleillement / luminosité de l'intérieur du bâtiment. Bien entendu, une commande individuelle d'un écran du groupe est toujours possible.

De façon avantageuse, une étape préalable est prévue qui consiste à définir un écran maître pour le groupe d'écrans, cet écran maître servant de référence pour l'exécution du procédé de configuration. Dans ce cas, la deuxième position de référence mentionnée précédemment est avantageusement égale à la première position de référence de cet écran maître.

Selon une variante de l'invention le procédé de configuration comprend au moins les étapes élémentaires suivantes :
i) positionner la barre de charge d'un écran sélectionné parmi les écrans du groupe d'écran à une position de référence commune de ce groupe ;
ii) enregistrer cette position de référence commune ;
iii) positionner la barre de charge de l'écran sélectionné dans une position de configuration correspondant à une position particulière des barres de charges des écrans à configurer ;
iv) enregistrer cette position de configuration
et, pour chaque écran du groupe,
v) positionner la barre de charge de l'écran à régler à la position de configuration de l'étape iii) ;
vi) enregistrer cette troisième position ; et
vii) utiliser ces trois positions enregistrées pour déterminer le paramètre de décalage de l'écran à configurer.

Selon un autre aspect de l'invention, le procédé comprend au moins les étapes élémentaires suivantes :
a) positionner la barre de charge d'un écran sélectionné dans une position de configuration correspondant à une position de référence d'un écran à configurer ;
b) enregistrer cette position de configuration
c) utiliser cet enregistrement pour déterminer le paramètre de décalage de l'écran à configurer.

L'invention concerne également un procédé de commande groupée du déplacement d'un groupe d'écrans configuré comme mentionné ci-dessus. Plus précisément, pour obtenir, suite à un ordre de commande, au moins l'alignement des barres de charges qui ont été déplacées, ce procédé de commande groupée prend en compte au moins un paramètre de décalage entre une première position de référence d'un écran et une deuxième position de référence, une de ces deux positions de référence étant une position de référence commune aux écrans du groupe d'écrans.

L'alignement des seules barres de charges qui ont été déplacées présente l'avantage de pouvoir conserver une configuration souhaitée pour certains écrans du groupe. Ce peut être le cas si les écrans d'une pièce ont été fermés pour obtenir une obscurité. Il est alors souhaité que l'automatisme gérant la façade ne change pas cette disposition. Inversement, il peut être souhaité d'aligner toutes les barres de charges, même celles qui n'ont pas été déplacées. Par exemple, en l'absence de personnes dans le bâtiment, il peut être souhaité un alignement de barres de charge et une gestion commune de leur position. Pour obtenir cette fonction, il faut que l'alignement soit possible. L'alignement des barres de charge est possible lorsque la course des écrans est commune, c'est à dire, lorsque les barres de charge des écrans du groupe ont une position identique dans un repère lié au groupe et non seulement à un seul écran.

Avantageusement, il est prévu une étape d'exécution de l'ordre de commande par un premier écran, dit maître dans un premier temps, puis, en décalé, les autres écrans du groupe, dits esclaves. Un fonctionnement de type « maître-esclaves » permet de mieux maîtriser le pilotage d'un groupe car l'écran maître sert de référence sur laquelle peuvent se baser les écrans esclaves.

Préférentiellement, suite à une commande groupée, le déplacement de la barre de charge des écrans esclaves est effectué légèrement après que la barre de charge de l'écran maître a atteint ou dépassé leurs positions respectives. Ce décalage facilite le pilotage des écrans. En effet, lorsqu'on arrête l'écran maître, il est souhaité que les écrans esclaves viennent s'aligner à la même position. Le temps de traitement de l'information par l'automatisme induit un léger décalage temporel de l'ordre d'arrêt des écrans esclaves. En conséquence, si le démarrage du déplacement des écrans maître et esclaves est simultané, les écrans esclaves s'arrêteront après l'écran maître, ce qui se traduit par un décalage de positions. Pour y remédier et aligner les barres de charge, il faut alors piloter les écrans esclaves dans l'autre sens. Le pilotage des écrans devient plus complexe. En intégrant un décalage temporel entre l'écran maître et les écrans esclaves, on peut s'affranchir de ce retour en arrière.

Selon un autre aspect avantageux de l'invention, le procédé de commande comprend au moins les étapes suivantes :
a) suite à un ordre de mouvement du groupe d'écran, déplacement d'au moins une barre de charge d'un écran de ce groupe et
b) suite à un ordre d'arrêt, positionnement de la barre de charge de chaque écran dont la barre de charge a été déplacée, de manière à obtenir un alignement des barres de charge qui ont été déplacées.

L'étape b) comprend avantageusement, en outre, le positionnement de la barre de charge des écrans dont la barre de charge n'a pas été déplacée, de manière à obtenir un alignement de toutes les barres de charge.

L'ordre de mouvement de l'étape a) peut être un ordre visant à déplacer la barre de charge jusqu'à une position prédéfinie, alors que l'ordre d'arrêt de l'étape b) est exécuté automatiquement dès que cette position est atteinte.

On peut en autre prévoir que l'alignement des barres de charge de l'étape b) est obtenu par le déplacement de la barre de charge de chaque écran jusqu'à une position déterminée par rapport à une position de référence propre à chaque écran.

L'invention sera mieux comprise à la lecture de la description qui va suivre, donnée uniquement à titre d'exemple et faite en se référant aux dessins annexés sur lesquels :
- la figure 1 est une représentation d'un écran susceptible d'être configuré par le procédé selon l'invention,
- les figures 2 à 5 sont des représentations des différentes configurations de déploiement d'écrans d'une installation dont les écrans sont commandés par un procédé configuré selon l'invention ;
- les figures 6 et 7 sont des ordinogrammes de deux séries d'étapes relatives à la détermination du paramètre de décalage par le procédé de configuration selon l'invention ;
- la figure 8 est un ordinogramme relatif à la détermination du paramètre de configuration des écrans du groupe ;
- la figure 9 est un ordinogramme relatif à la détermination du paramètre de décalage par le procédé de configuration selon l'invention ;
- les figures 10 et 11 sont des ordinogrammes du procédé de commande groupée d'un groupe incluant des écrans « décalés » configurés selon l'invention.

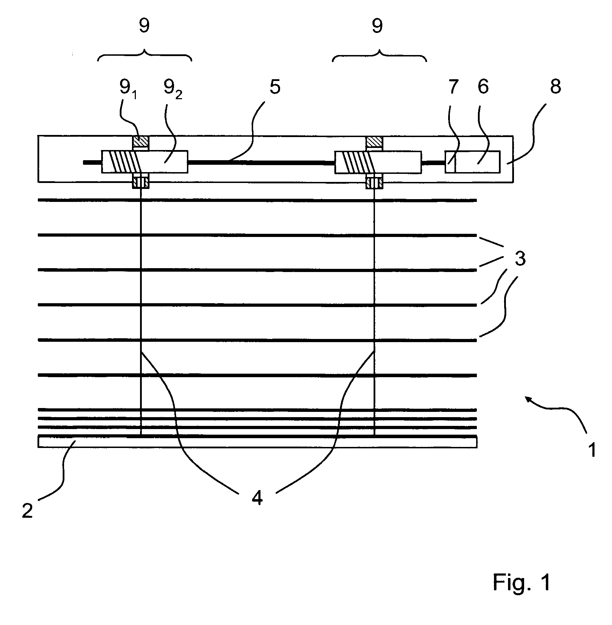

Le procédé de configuration selon l'invention est destiné à configurer plusieurs écrans équipés d'une barre de charge. Ce type d'écran peut être un store vénitien motorisé comme illustré dans une installation 1 telle que représentée à la figure 1. L'écran comprend une partie mobile composée d'une barre de charge 2 et des lames orientables 3, la partie mobile s'inscrivant dans un cadre correspondant à l'ouverture à occulter. La barre de charge 2 est reliée à des dispositifs d'enroulement 9 par deux cordons 4. Chaque dispositif d'enroulement 9 comprend un tambour 9₂ autour duquel s'enroule le cordon correspondant 4 et un moyen de guidage 9₁ permettant de guider le cordon vers le tambour. Les deux tambours 9₂ sont reliés entre eux par un arbre 5. Cet arbre 5 est entraîné en rotation par un actionneur 6. Cet actionneur comprend un moyen de comptage 7 permettant de calculer la position relative de la barre de charge par rapport à une position de référence propre ou intrinsèque à l'écran. Ce moyen de comptage peut être un encodeur mesurant le nombre de tours effectués par l'arbre 5 par rapport à la position de référence prédéterminée.

Un moyen non représenté d'orientation des lames peut également être prévu. Il peut être indépendant du dispositif d'enroulement ou y être associé. Généralement, les dispositifs d'enroulement 9 et l'actionneur 6 sont intégralement disposés à l'intérieur d'un caisson 8.

Lorsque l'installation comprend des écrans décalés, c'est à dire des écrans n'ayant pas la même fin de course haute du fait d'un réglage différent ou d'un cadre décalé, il est nécessaire de configurer chaque écran du groupe afin de pouvoir optimiser une commande groupée. Cette configuration s'impose si l'on souhaite obtenir l'alignement des barres de charges du groupe.

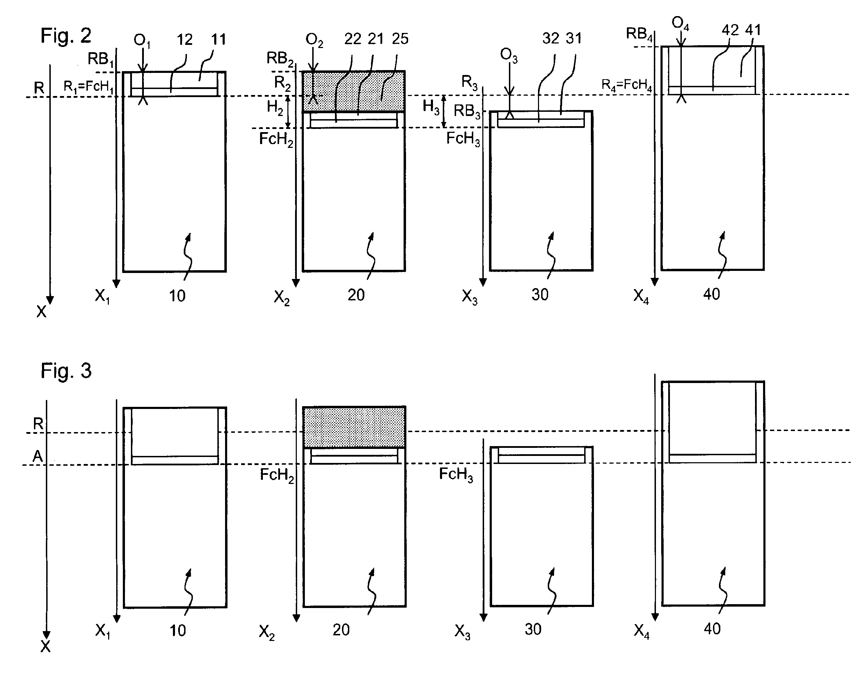

Une telle installation est illustrée dans les figures 2 à 5. Ces figures représentent une installation composée d'écrans esclaves décalés 20, 30 et 40 par rapport à un écran maître 10. Dans ce qui suit, on désigne par écran « n » l'un des écrans dont la référence s'exprime sous la forme « n0 ». Ainsi, l'indice 1 correspond aux paramètres relatifs à l'écran 10, l'indice 2 à l'écran 20, etc...

La course de chaque écran est caractérisée par une fin de course haute FcH₁, FcH₂, FcH₃, FcH₄, et une fin de course basse non représentée. On note respectivement 12, 22, 32 et 42 les barres de charge des écrans 10, 20, 30 et 40. Chaque barre de charge se déplace selon une course délimitée par les fins de course haute et basse. Ces fins de course, réglées par l'utilisateur, sont définies par rapport à une position de référence R₁, R₂, R₃, R₄, propre à chaque écran.

Une position de référence Rₙ d'un écran « n » correspond en principe au zéro compteur du moyen de comptage 7ₙ associé à cet écran. Ainsi, la mesure d'une position de la barre de charge d'un écran « n » par rapport à la position de référence de l'écran Rₙ correspond à la valeur directement lue sur le moyen de comptage 7ₙ associé à l'écran. La position de référence R₁ à R₄ de chaque écran 10 à 40 est déterminée en lien avec un paramètre de décalage traduisant une relation entre une référence propre à un écran et une position de référence commune au groupe. Cette relation permet d'obtenir l'alignement des barres de charge du groupe d'écrans suite à une commande groupée. Ainsi, en fonction du mode de pilotage adopté, une opération spécifique de configuration doit être réalisée pour déterminer ces paramètres de décalage. Cette opération est détaillée dans ce qui suit.

Les écrans de l'installation présentent différents décalages possibles entre eux. L'écran 20 est équipé d'un linteau technique 25, impliquant un décalage vers le bas H₂ de la fin de course haute FcH₂ par rapport à sa position de référence R₂. L'écran 30 est plus petit que l'écran maître 10. Sa fin de course haute FcH₃ est décalée vers le bas d'une valeur H₃ par rapport à sa position de référence R₃. Les fins de course FcH₁ et FcH₄ des écrans 10 et 40 sont identiques. L'écran 40 se distingue de l'écran maître 10 en ce que son cadre se prolonge en hauteur au-dessus du cadre de l'écran 10.

Chaque écran « n » a, par ailleurs, une position de recalage RB₁, RB₂, RB₃, RB₄ pour laquelle l'écran est dans une configuration reproductible stable permettant le recalage du moyen de comptage 7ₙ associé à cet écran. Généralement, cette position correspond à une butée absolue où l'écran est complètement replié, la barre de charge ayant atteint une butée physique. Cette butée est détectée par l'actionneur automatiquement, soit par mesure de variation de courant, soit par un interrupteur, soit par un autre moyen équivalent.

Pour éviter une dérive du système de comptage 7ₙ d'un actionneur, une opération de synchronisation est régulièrement effectuée pour chaque écran. Elle consiste à positionner l'écran « n » à cette position de recalage RBₙ et à réinitialiser le moyen de comptage 7ₙ associé à l'écran « n » par rapport à cette position de recalage. La réinitialisation par rapport à une position spécifique consiste généralement à définir la position de référence Rₙ pour le comptage, couramment dénommée « zéro compteur », pour cette position. Dans le cas présent, la position de référence Rₙ pour le comptage correspond à cette position de recalage RBₙ. Suite à cette opération, il est alors nécessaire de réinitialiser le moyen de comptage 7ₙ associé à l'écran « n » par rapport à la position de référence Rₙ souhaitée. Cela consiste à modifier le référentiel, ou zéro compteur, du moyen de comptage 7ₙ en fonction d'un paramètre fixe prédéfini. Ce paramètre correspond à l'écart constant entre la position de recalage RBₙ et la position de référence Rₙ souhaitée. Préférentiellement, ce paramètre est exprimé dans l'unité de comptage du moyen de comptage 7ₙ.

Dans ce qui suit, lorsqu'une position est mesurée par le moyen de comptage 7ₙ initialisé par rapport à position de recalage RBₙ de l'écran, on ajoute un prime « ' » à la valeur de la mesure. Si la position est mesurée par le moyen de comptage 7ₙ initialisé par rapport la position de référence Rₙ, aucun signe n'est ajouté à la valeur de la mesure. Par exemple, la valeur B₁ désigne la mesure de la position de la barre de charge 12 de l'écran 10 exprimé par rapport à R₁, alors que la valeur B'₁ désigne la mesure de la position de la barre de charge de l'écran 10 exprimé par rapport à RB₁. L'enregistrement d'une position est l'enregistrement de la valeur d'un paramètre mesuré par le moyen de comptage 7ₙ initialisé par rapport à la position de référence Rₙ ou par rapport à la position de recalage RBₙ. La position de recalage RBₙ est considérée comme une position référence d'un écran « n ».

A la suite de cette opération de synchronisation, une position de référence Rₙ est associée à chaque écran du groupe. Le mouvement des écrans est ainsi maîtrisé grâce à ces positions de référence Rₙ définies par rapport à une référence commune R, comme expliquée ci-après. Une commande groupée peut donc plus facilement être exécutée.

L'application de l'invention dépend du mode de pilotage des écrans du groupe. Ainsi, pour chaque procédé de configuration correspond un mode de pilotage déterminé. Pour l'illustrer, deux modes de pilotages sont détaillés.

Le principe du premier mode de pilotage est le suivant. Pour chaque écran « n », sa position de référence Rₙ est déterminée de manière à être alignée avec toutes les autres positions de référence des écrans du groupe et avec une position de référence commune R. En conséquence, la position X d'une barre de charge calculée par un moyen de comptage d'un écran correspond à la même position X calculée par un moyen de comptage d'un autre écran du groupe. Ainsi, pour pouvoir aligner les barres de charge, il suffit d'émettre la même consigne de position X à tous les actionneurs du groupe. Une fois les écrans configurés, le pilotage des écrans est direct : la consigne est la même pour tous les écrans.

Pour obtenir une position de référence commune R, il faut que chaque écran « n » intègre un paramètre de décalage dans le système de pilotage propre à l'écran. Dans l'installation décrite à la figure 2, cela se traduit par les paramètres O₁, O₂, O₃, O₄. Ces paramètres permettent de positionner le référentiel propre ou intrinsèque Rₙ à un écran « n » par rapport à une position déterminée arbitraire et, plus particulièrement, d'aligner la position de référence intrinsèque Rₙ d'un écran avec une position de référence commune R du groupe d'écrans.

Dans le présent exemple, ces paramètres correspondent à l'écart entre la position de référence commune R avec la position de recalage RBₙ de l'écran correspondant comme défini précédemment, lors de l'étape de synchronisation.

Il est à noter que la position de référence Rₙ d'un écran « n » peut se situer en dehors de la course de cet écran, comme représenté par exemple pour les écrans 20 et 30. Cette référence Rₙ peut également être virtuelle en étant positionnée au-delà de la butée physique RBₙ de la barre de charge comme l'illustre l'écran 30. Les paramètres de décalage O₁ à O₄ permettent donc de redéfinir automatiquement et systématiquement le référentiel intrinsèque Rₙ d'un écran « n » lors d'une opération de synchronisation.

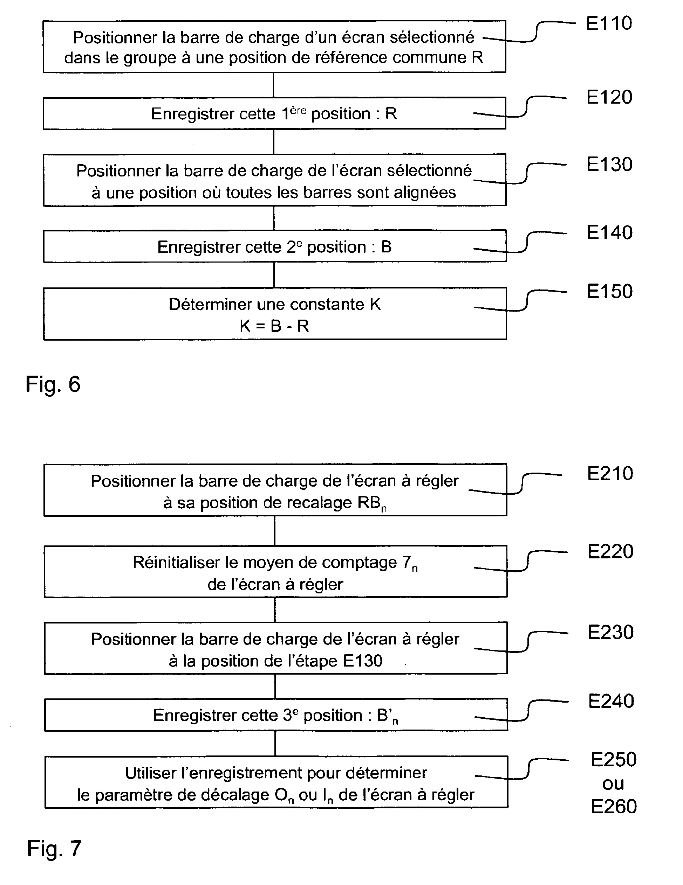

Le procédé de configuration des écrans du groupe selon ce mode de pilotage intègre une étape de détermination des valeurs des paramètres de décalage On. Un exemple de réalisation est décrit dans les figures 6 et 7. Dans cet exemple, on considère que tous les écrans ont des moyens de comptage 7ₙ identiques.

Dans un premier temps, on sélectionne un écran, par exemple l'écran 10, avec lequel on met en oeuvre les étapes représentées à la figure 6.

Dans une première étape E110, on positionne la barre de charge 12 de l'écran sélectionné 10, au niveau de la position de référence commune R arbitraire.

Dans une deuxième étape E120, on enregistre la position R. Dans l'exemple où l'écran sélectionné est l'écran 10, la position R est mesurée par le moyen de comptage 7₁ comme égale à la valeur R₁ ou à la valeur R'₁ selon que la mesure est effectuée avant ou après remise à zéro par rapport à la position de recalage RB₁.

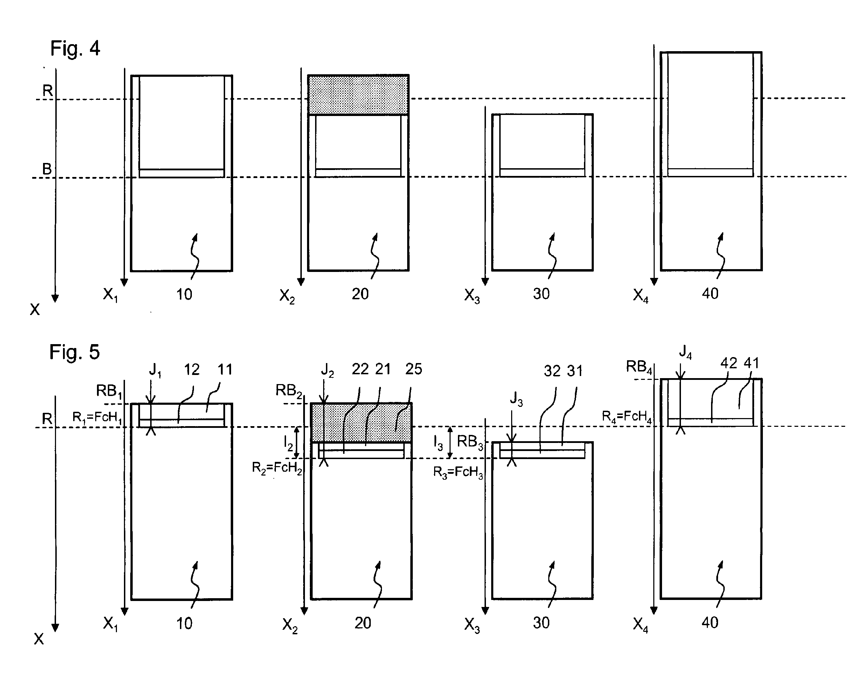

Dans une troisième étape E130, on positionne la barre de charge de l'écran sélectionné 10 au niveau d'une position de configuration arbitraire où toutes les barres de charge du groupe sont alignées, par exemple, la position B illustrée à la figure 4.

Dans une quatrième étape E140, on enregistre la position B. Comme à l'étape 120, la valeur mesurée par le moyen de comptage 7₁ pour la position B peut s'exprimer sous la forme B₁ ou B₁

Dans une cinquième étape E150, on calcule alors une constante K correspondant à la différence entre B et R, soit K = B - R. Selon l'exemple considéré, K = B₁ - R₁ ou K = B'₁ - R'₁.

Ensuite, pour chaque écran du groupe, on met en oeuvre la série d'étapes représentée à la figure 7.

Dans une première étape E210, on positionne la barre de charge de l'écran « n » à configurer à sa position de position de recalage RBₙ.

Dans une deuxième étape E220, on initialise le moyen de comptage 7ₙ de cet écran.

Dans une troisième étape E230, on positionne la barre de charge de l'écran à configurer au niveau d'une position de configuration précédemment définie à l'étape E130, à savoir B.

Dans une quatrième étape E240, on enregistre cette position par la valeur correspondante B'ₙ, en prenant comme référence la position de recalage RBₙ, le moyen de comptage 7ₙ étant initialisé par rapport à cette position RBₙ conformément à l'étape E220.

Dans une cinquième étape E250, on calcule alors le paramètre de décalage On à associer à l'écran à configurer. Ce paramètre correspond à la différence entre B'ₙ et K, soit On = B'ₙ - K..

Préférentiellement, la position de référence commune R correspond à la fin de course haute souhaitée la plus « haute » des écrans du groupe et/ou la fin de course haute souhaitée de l'écran maître FcH₁, ces positions pouvant être identiques.

Les étapes précédentes E110 à E 250 peuvent également être exécutées dans un ordre différent à partir du moment où les paramètres de décalages On peuvent être déterminés avec ces mesures. Par exemple, l'initialisation des moyens de comptage 7ₙ peut être réalisée en premier lieu.

En variante, les étapes E110 à E150 ne sont pas réalisées, la position de configuration de l'étape E230 est la position de référence commune R arbitraire et, pour le calcul du paramètre de décalage On à l'étape E250, on considère K = 0. Il faut noter que cette variante ne convient pas si la position de référence commune R n'est pas dans la course de l'écran à configurer, comme c'est le cas pour l'écran 30 dans notre exemple.

L'enregistrement peut être assisté avec calcul automatique des paramètres. On entre dans un mode d'enregistrement et, dès qu'on atteint une position caractéristique B'₁, B'₂, B'₃, B'₄ ou R (FcH₁), on l'enregistre en appuyant sur une touche spécifique d'un automatisme, par exemple par un appui long sur un bouton d'une télécommande. L'enregistrement peut également être manuel. Dans ce cas, on relève les positions caractéristiques B'₁, B'₂, B'₃, B'₄ ou R (FcH₁) à partir d'une interface reproduisant une valeur instantanée déterminée par le moyen de comptage 7ₙ correspondant et on reporte ces valeurs dans l'automatisme gérant le groupe d'écrans. Cela peut être réalisé via un logiciel, la programmation se faisant alors sur ordinateur.

A l'issue des opérations précédentes, les paramètres de décalages permettent d'aligner toutes les positions de référence Rₙ des écrans du groupe avec la position de référence commune R, suite à une opération de synchronisation.

Le principe du second mode de pilotage est le suivant : la position de référence Rₙ propre à un écran correspond à une position spécifique de l'écran, telle que la fin de course haute FcHₙ définie par l'utilisateur. Ainsi, les différentes positions de référence Rₙ ne sont pas alignées entre elles.

Tout comme dans le précédent mode de pilotage, il est prévu un mode de synchronisation dans lequel chaque écran « n » rejoint une position de recalage RBₙ où le moyen de comptage 7ₙ associé à cet écran est réinitialisé. La position de référence Rₙ et, par conséquent, la fin de course haute FcHₙ de chaque écran sont alors déterminées par rapport à un paramètre de configuration Jₙ préalablement enregistré. Ce paramètre Jₙ a une définition analogue au paramètre de décalage On défini dans le mode de pilotage précédent, en ce sens qu'il correspond à l'écart entre la position de référence intrinsèque Rₙ d'un écran et la position de recalage RBₙ de cet écran. Cependant, ce paramètre n'est pas suffisant pour permettre l'alignement des barres de charge des écrans du groupe. En effet, si une même consigne est envoyée à tous les écrans, compte tenu du non-alignement des différentes positions de référence Rₙ, les barres de charges des écrans décalés ne pourront pas s'aligner avec les autres barres de charge sans prendre un compte un autre paramètre que ce paramètre de configuration. Il faut donc que la commande intègre un paramètre de décalage Iₙ. Le paramètre de décalage doit directement être pris en compte pour assurer l'alignement des barres de charge des écrans du groupe. Il est déterminé en fonction du mode de pilotage des écrans « n ». Selon ce second mode de pilotage, pour chaque écran, le paramètre de décalage Iₙ correspond à l'écart entre la position de référence Rₙ qui est égale à sa fin de course haute, FcHₙ dans l'exemple, et une position de référence commune R arbitraire. Ainsi, lorsqu'une consigne de position X, exprimée par rapport à la référence commune R, est émise, la consigne est retranscrite pour les écrans du groupe en fonction du paramètre de décalage Iₙ. La position ciblée pour un écran « n » est corrigée de ce paramètre de décalage et vaut Xₙ = X - Iₙ.

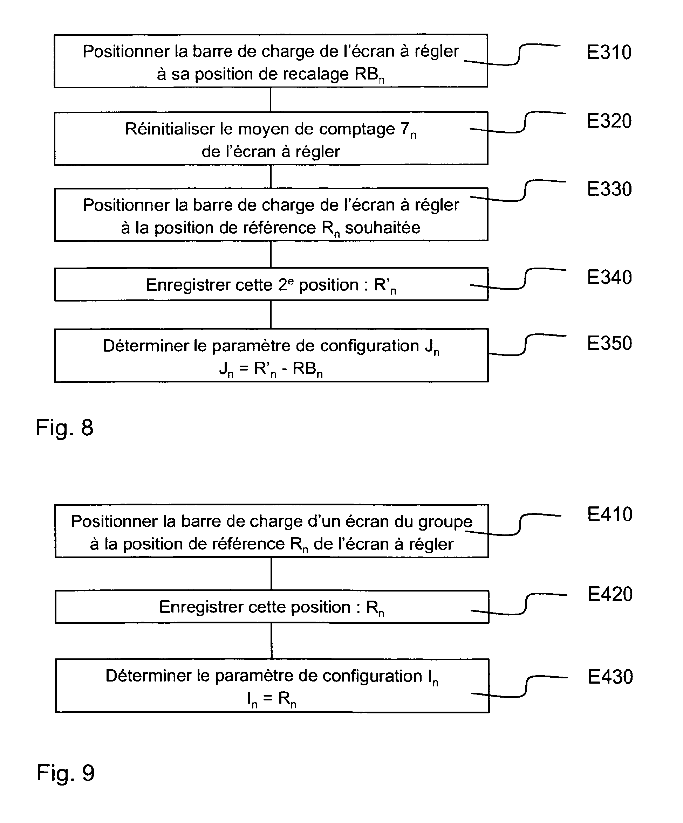

L'enregistrement du paramètre de configuration Jₙ peut être direct. Il est illustré à la figure 8 et est réalisé comme suit :
Dans une première étape E310, on positionne la barre de charge de l'écran
   « n » à configurer à sa position de recalage RBₙ.

Dans une deuxième étape E320, on initialise le moyen de comptage 7ₙ de cet écran.

Dans une troisième étape E330, on positionne la barre de charge de l'écran à configurer au niveau de la position de référence Rₙ souhaitée qui est préférentiellement sa fin de course haute FcHₙ.

Dans une quatrième étape E340, on enregistre la position R'ₙ.

Dans une cinquième étape E350, on calcule alors le paramètre de configuration Jₙ correspondant à la différence entre R'ₙ et RBₙ (Jₙ = R'ₙ - RBₙ ou Jₙ = FCHₙ - RBₙ).

Le procédé de configuration des écrans du groupe selon ce second mode de pilotage intègre également une étape de détermination des valeurs des paramètres de décalage Iₙ. Une première variante reprend les étapes E110 à E150 définies précédemment. Puis le procédé de configuration s'enchaîne pour chaque écran du groupe par les étapes E210 à 240, telles que définies précédemment. Le procédé se poursuit avec une étape E260 consistant à calculer le paramètre de décalage Iₙ à associer à l'écran à configurer. Ce paramètre correspond à la différence entre K et la différence entre B'ₙ et Jₙ, soit Iₙ = K - (B'ₙ - Jn).

Dans le cas où le moyen de comptage 7ₙ est initialisé par rapport à sa la position de référence Rₙ, les étapes E210 et E220 peuvent être supprimées et le calcul du paramètre de décalage Iₙ à l'étape E260 est simplifié et correspond à la différence entre K et B'ₙ, soit Iₙ = K - B'ₙ.

Une alternative préférentielle est d'utiliser un écran sélectionné parmi les écrans du groupe dont le moyen de comptage 7ₙ est initialisé par rapport à sa position de référence Rₙ. Il est préférable que tous les écrans disposent d'un moyen de comptage 7ₙ identique. Comme le montre la figure 9, les étapes de configuration, sont alors :

Dans une première étape E410, on positionne la barre de charge de l'écran sélectionné à la position de référence Rₙ de l'écran à configurer.

Dans une deuxième étape E420, on enregistre la position Rₙ.

Dans une troisième étape E430, on détermine alors le paramètre de décalage Iₙ à associer à l'écran à configurer. Ce paramètre correspond à cette position Rₙ (Iₙ = Rₙ).

Tout comme précédemment, l'enregistrement des paramètres peut être manuel ou assisté.

Il est clair que les modes de pilotage décrits précédemment peuvent facilement être réalisés si les écrans du groupe disposent de moyens de comptage 7ₙ identiques et des structures analogues, notamment leur diamètre d'enroulement. Si ce n'est pas le cas, il faut prévoir des moyens de retranscription qui rendent plus complexe le pilotage.

Une fois les écrans du groupe configurés, les deux modes de pilotage proposés permettent, suite à une commande générale, d'obtenir au moins l'alignement des barres de charges des écrans qui ont été déplacées.

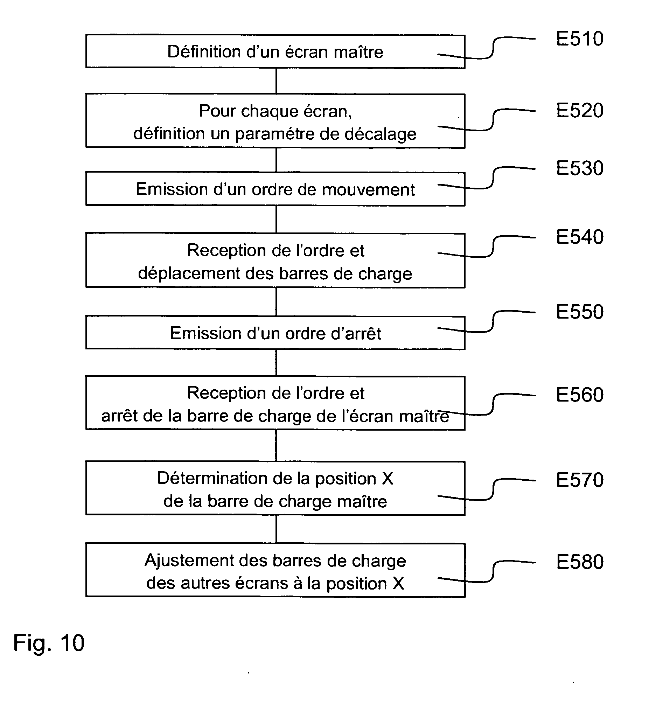

Un tel procédé de commande groupée assurant cette fonction est illustré à la figure 10 et comprend préférentiellement les étapes suivantes :

Dans une première étape E510, un écran du groupe, par exemple l'écran 10, est défini comme l'écran maître, c'est à dire l'écran sur lequel se basent les autres écrans du groupe. Ainsi, la position des barres de charges dépend de la position de la barre de charge de l'écran maître. Les autres écrans sont qualifiés d'« esclaves » dans ce qui suit, certains de ces écrans étant décalés, par rapport à l'écran maître.

Dans une deuxième étape E520, on affecte un paramètre de positionnement à chaque écran, y compris l'écran maître. Ce paramètre reflète une condition qui doit être prise en compte par le procédé afin de piloter les écrans décalés pour toujours obtenir l'alignement des barres de charge du groupe en position intermédiaire. En fonction du mode de pilotage des écrans, le paramètre de décalage n'est pas défini de la même façon, ni pris en compte au même moment.

Dans une troisième étape E530, un ordre de mouvement est émis vers les différents écrans par un organe de commande, tel qu'une télécommande, un interrupteur ou un automate programmé. Cet ordre peut être un ordre de montée, de descente. Préférentiellement, l'ordre émis vers chaque écran esclave du groupe est émis avec un décalage spatial ou temporel par rapport à l'ordre émis vers l'écran maître. L'ordre peut être émis par l'automatisme pilotant le groupe ou celui pilotant l'écran maître.

Dans une quatrième étape E540, l'ordre émis est reçu et traité par un récepteur afin de l'exécuter. Chaque écran du groupe d'écrans est mû par un actionneur comprenant généralement un récepteur. Le pilotage des écrans peut être centralisé sur un seul récepteur indépendant. Chaque barre de charge exécute alors un déplacement correspondant à l'ordre souhaité. Pour un ordre de montée, le mouvement correspond au repli de l'écran. Inversement, l'écran se déploie pour un ordre de descente. Le déplacement des barres de charge peut être décalé entre l'écran maître et les écrans esclaves.

Dans une cinquième étape E550, un ordre d'arrêt du mouvement est émis par l'organe de commande.

Dans une sixième étape E560, l'ordre d'arrêt de l'étape E550 est exécuté sur l'écran maître uniquement.

Dans une septième étape E570, la position X de la barre de charge 12 de l'écran maître 10 est déterminée grâce au moyen de comptage 7₁ associé à l'écran. Cette position X est une position relative de la barre de charge 12 par rapport à une position de référence R₁ propre à l'écran maître.

Dans une huitième étape E580, chaque écran esclave dont la barre de charge a été déplacée, reçoit l'ordre d'atteindre la position où se trouve la barre de charge de l'écran maître. Cet ordre est un ordre de déplacement de la barre de charge de l'écran esclave « n » pour atteindre une position Xₙ par rapport à une position de référence Rₙ propre cet l'écran. La position Xₙ correspond à la retranscription de la position X dans le référentiel de l'écran « n ».

Cette retranscription est directe dans le cas où la position de référence Rₙ d'un écran « n » est la position de référence commune R, comme dans le premier mode de pilotage mentionné ci-dessus. L'ordre est identique pour tous les écrans. Tous les écrans « n » doivent atteindre la position Xₙ = X.

Dans le second mode de pilotage, si la position de référence Rₙ d'un écran « n » est différente de la position de référence de l'écran maître, la position à atteindre doit être retranscrite dans le référentiel de l'écran « n ». Dans ce nouveau référentiel, l'ordre est donc d'atteindre la position Xₙ = X - Iₙ.

Alternativement, l'ordre d'atteindre la position Xₙ est émis vers tous les écrans, y compris ceux dont la barre de charge est restée immobile avant l'étape E550.

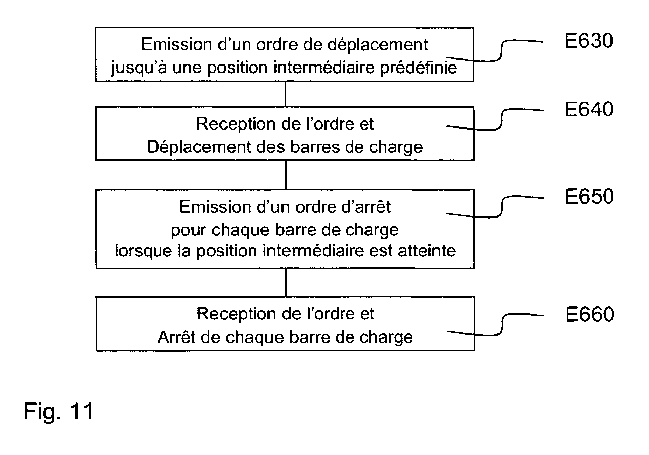

La figure 11 montre une variante du procédé de commande groupée précédent consistant à traiter un ordre de commande d'aller en position intermédiaire prédéfinie suite aux étapes E510 et E520.

Dans une étape E630, un ordre de rejoindre une position intermédiaire prédéfinie est émis par un organe de commande.

L'étape E640 correspond à l'étape E540. Le déplacement correspondant à l'ordre souhaité peut être le repli ou le déploiement de l'écran commandé, en fonction de la position de sa barre de charge. Le décalage temporel n'est pas indispensable dans ce cas.

Dans une étape E650, un ordre d'arrêt du mouvement est automatiquement déclenché, pour chaque écran, dès que sa barre de charge atteint la position intermédiaire prédéfinie.

Dans une étape E660, les ordres d'arrêt de l'étape E650 sont exécutés au moment opportun.

Comme envisagée ci-dessus, une amélioration consiste à introduire un décalage temporel lors de l'exécution du mouvement d'un écran esclave par rapport à un écran maître. Un tel décalage temporel, doit être suffisant pour s'assurer que l'ordre d'arrêt des écrans esclaves est émis avant que la barre de charge de ces écrans n'ait atteint la position d'arrêt souhaitée. En effet, les étapes E560 et E570 induisent un temps de traitement qui retarde l'exécution de l'étape E580. Si les écrans esclaves et l'écran maître se déplacent simultanément, il est probable que les écrans esclaves dépassent la position d'arrêt souhaitée au moment de l'exécution de l'étape E580. II faut alors commander un retour en arrière de ces écrans, ce qui est moins esthétique, induit un pilotage plus complexe et une consommation électrique plus importante. Le décalage temporel entre l'écran maître et les écrans esclaves permet d'éviter ce retour en arrière.

Une alternative consiste à déclencher le mouvement de la barre de charge d'un écran esclave dès que la barre de charge de l'écran maître a atteint ou dépassé le niveau de la barre de charge de cet écran esclave. Il faut alors que le mode de pilotage des écrans du groupe intègre une comparaison entre la position de la barre de charge de l'écran maître et à la position de chaque barre de charge des autres écrans du groupe. En fonction du résultat de cette comparaison, le procédé ordonnera, à l'étape 540 ou 640, le mouvement d'une barre de charge arrêtée d'un écran si la barre de charge de l'écran maître a atteint ou dépassé cette position arrêtée selon la course de l'écran maître. La comparaison peut être réalisée de différentes façons. Ce peut être une comparaison à partir d'une mesure systématique des positions des écrans ou à partir d'enregistrements des positions des barres de charges des écrans esclaves, ceux-ci étant alors comparés avec la mesure de la position de la barre de charge de l'écran maître.

Il peut être prévu que la fonction d'alignement de la barre de charge d'un écran avec les autres barres du groupe n'est activée que lorsque cette barre de charge a été déplacée. Ainsi, un écran qui a été fermé manuellement peut ne pas être activé par l'automatisme alignant les barres de charge. En résultat, toutes les autres barres de charge du groupe seront alignées, sauf celle de cet écran. A l'inverse, il peut être souhaitable que la fonction d'alignement soit activée pour toutes les barres de charge des écrans du groupe et forcer ainsi la manoeuvre.

Par exemple, il peut s'agir d'une fonction automatique réalisée la nuit ou lors de jours non travaillés.

## Revendications

1. Procédé de configuration d'un groupe d'écrans motorisés, chaque écran motorisé (n, 10-40) du groupe comprenant une barre de charge (12-42) se déplaçant selon une course définie, **caractérisé en ce qu'**il comprend une étape (E250 ; E260 ; E430) consistant à déterminer, pour chaque écran « n » du groupe, un paramètre de décalage (Iₙ, Oₙ) entre une première position de référence (Rₙ, R) de l'écran et une deuxième position de référence (R, RBₙ), une des deux positions de référence étant une position de référence commune (R) aux écrans du groupe d'écrans.

2. Procédé de configuration selon la revendication 1 **caractérisé en ce que** chaque écran (n, 10-40) du groupe est couplé à un moyen de comptage (7ₙ) qui définit la position relative de la barre de charge (12-42) par rapport à la première position de référence (Rₙ, R) propre à l'écran ou par rapport à la deuxième position de référence (R, RBₙ).

3. Procédé de configuration selon la revendication 2, **caractérisé en ce que** la deuxième position de référence est une position de recalage (RBₙ) du moyen de comptage (7ₙ) propre à chaque écran (n, 10-40) et **en ce que** la première position de référence est la position de référence commune (R) au groupe.

4. Procédé de configuration selon l'une des revendications 1 ou 2 **caractérisé en ce que** la deuxième position de référence est la position de référence commune (R) au groupe d'écrans.

5. Procédé de configuration selon la revendication 4, **caractérisé en ce que** la première position de référence (Rₙ) d'un écran (n, 10-40) à configurer est une position de fin de course haute (FcHₙ) de cet écran.

6. Procédé de configuration selon l'une des revendications précédentes, **caractérisé en ce qu'**il comprend une étape préalable (E510) consistant à définir un écran maître (10) pour le groupe d'écrans cet écran maître servant de référence pour l'exécution du procédé de configuration.

7. Procédé de configuration selon la revendication 6 **caractérisé en ce que** la deuxième position de référence (R) est la première position de référence (R₁) de l'écran maître (10).

8. Procédé de configuration selon l'une des revendications précédentes, **caractérisé en ce qu'**il comprend au moins les étapes élémentaires suivantes :
i). positionner (E110) la barre de charge (12) d'un écran sélectionné (10) parmi les écrans du groupe d'écrans à une position de référence commune (R) du groupe ;
ii). enregistrer (E120) cette position de référence commune (R) ;
iii). positionner (E130) la barre de charge de l'écran sélectionné (10) dans une position de configuration correspondant à une position particulière (B) des barres de charge des écrans à configurer ;
iv). enregistrer (E140) cette position de configuration (B) ;
et, pour chaque écran du groupe,
v). positionner (E230) la barre de charge (12-42) de l'écran à régler à la position de configuration (B) de l'étape iii) ;
vi). enregistrer (E240) cette troisième position (B'ₙ) ; et
vii). utiliser (E250 ; E260) ces trois positions enregistrées (R, B, B'ₙ) pour déterminer le paramètre de décalage (Iₙ, On) de l'écran à configurer.

9. Procédé de configuration selon l'une des revendications 1 à 7, **caractérisé en ce qu'**il comprend au moins les étapes élémentaires suivantes :
a) positionner (E410) la barre de charge d'un écran sélectionné (10) dans une position de configuration correspondant à une position de référence (Rₙ) d'un écran à configurer ;
b) enregistrer (E420) cette position de configuration (Rₙ)
c) utiliser (E430) cet enregistrement pour déterminer le paramètre de décalage (Iₙ) de l'écran à configurer.

10. Procédé de commande groupée du déplacement d'un groupe d'écrans comprenant au moins deux écrans motorisés (n, 10-40) et configuré par le procédé de l'une des revendications précédentes, chaque écran du groupe comprenant une barre de charge (12-42) se déplaçant selon une course définie, **caractérisé en ce que** pour obtenir, suite à un ordre de commande (E530) au moins l'alignement des barres de charge (12-52) qui ont été déplacées, ce procédé prend en compte (E580) au moins un paramètre de décalage (Iₙ, On) entre une première position de référence (Rₙ, R) d'un des écrans et une deuxième position de référence (R, RBₙ), une des deux positions de référence étant une position de référence commune (R) aux écrans du groupe d'écrans.

11. Procédé de commande groupée selon la revendication 10, **caractérisé en ce qu'**il comprend au moins les étapes suivantes :
a) suite à un ordre de mouvement (E530) du groupe d'écrans, déplacement (E540) d'au moins une barre de charge (12-42) d'un écran (n) du groupe ; et
b) suite à un ordre d'arrêt (E550), positionnement (E580) de la barre de charge de chaque écran du groupe ou de chaque écran dont la barre de charge a été déplacée, de manière à obtenir au moins l'alignement des barres de charge qui ont été déplacées.

12. Procédé de commande groupée selon la revendication 11, **caractérisé en ce que** l'ordre de mouvement (E530) de l'étape a) est un ordre visant à déplacer la barre de charge (12-42) jusqu'à une position prédéfinie (B) et **en ce que** l'ordre d'arrêt (E550) de l'étape b) est alors exécuté automatiquement dès que la position prédéfinie est atteinte.

13. Procédé de commande groupée selon l'une des revendications 11 ou 12, **caractérisé en ce que** l'alignement des barres de charges de l'étape b) est obtenu par le déplacement de la barre de charge de chaque écran (10-40) jusqu'à une position déterminée par rapport à une position de référence (Rₙ) propre à chaque écran.

## Claims

1. Method of configuring a group of motorized screens, each motorized screen (n, 10-40) of the group comprising a load bar (12-42) that is displaced according to a defined travel, **characterized in that** it comprises a step (E250; E260; E430) consisting in determining for each screen "n" of the group, a shift parameter (In, On) between a first reference position (Rₙ, R) of the screen and a second reference position (R, RBₙ), one of the two reference positions being a reference position (R) common to the screens of the group of screens.

2. Configuration method according to Claim 1, **characterized in that** each screen (n, 10-40) of the group is coupled to a counting means (7ₙ) which defines the relative position of the load bar (12-42) in relation to the first reference position (Rₙ, R) specific to the screen or in relation to the second reference position (R, RBₙ).

3. Configuration method according to Claim 2, **characterized in that** the second reference position is a realignment position (RBₙ) of the counting means (7ₙ) specific to each screen (n, 10-40) and **in that** the first reference position is the reference position (R) common to the group.

4. Configuration method according to one of Claims 1 or 2, **characterized in that** the second reference position is the reference position (R) common to the group of screens.

5. Configuration method according to Claim 4, **characterized in that** the first reference position (Rₙ) of a screen (n, 10-40) to be configured is a top end-of-travel position (FcHₙ) of this screen.

6. Configuration method according to one of the preceding claims, **characterized in that** it comprises a preliminary step (E510) consisting in defining a master screen (10) for the group of screens, this master screen serving as a reference for the execution of the configuration method.

7. Configuration method according to Claim 6, **characterized in that** the second reference position (R) is the first reference position (R₁) of the master screen (10).

8. Configuration method according to one of the preceding claims, **characterized in that** it comprises at least the following basic steps:
i). positioning (E110) the load bar (12) of a selected screen (10) from the screens of the group of screens at a common reference position (R) of the group;
ii). recording (E120) this common reference position (R);
iii). positioning (E130) the load bar of the selected screen (10) in a configuration position corresponding to a particular position (B) of the load bars of the screens to be configured;
iv). recording (E140) this configuration position (B);
and, for each screen of the group,
v). positioning (E230) the load bar (12-42) of the screen to be set at the configuration position (B) of the step iii);
vi). recording (E240) this third position (B'ₙ); and
vii). using (E250; E260) these three recorded positions (R, B, B'ₙ) to determine the shift parameter (Iₙ, Oₙ) of the screen to be configured.

9. Configuration method according to one of Claims 1 to 7, **characterized in that** it comprises at least the following basic steps:
a) positioning (E410) the load bar of a selected screen (10) in a configuration position corresponding to a reference position (Rₙ) of a screen to be configured;
b) recording (E420) this configuration position (Rₙ),
c) using (E430) this record to determine the shift parameter (Iₙ) of the screen to be configured.

10. Grouped control method for the displacement of a group of screens comprising at least two motorized screens (n, 10-40), each screen of the group comprising a load bar (12-42) that is displaced according to a predefined travel, **characterized in that** to obtain, following a control command (E530), at least the alignment of the load bars (12-52) that have been displaced, this method takes into account (E580) at least a shift parameter (Iₙ, Oₙ) between a first reference position (Rₙ, R) of one of the screens and a second reference position (R, RBₙ), one of the two reference positions being a reference position (R) common to the screens of the group of screens.

11. Grouped control method according to Claim 10, **characterized in that** it comprises at least the following steps:
a) following a command (E530) to move the group of screens, displacement (E540) of at least one load bar (12-42) of a screen (n) of the group; and
b) following a stop command (E550), positioning (E580) the load bar of each screen of the group or of each screen whose load bar has been shifted, so as to obtain at least the alignment of the load bars that have been shifted.

12. Grouped control method according to Claim 11, **characterized in that** the movement command (E530) of the step a) is a command aiming to displace the load bar (12-42) to a predefined position (B) and **in that** the stop command (E550) of the step b) is then executed as soon as the predefined position is reached.

13. Grouped control method according to one of Claims 11 or 12, **characterized in that** the alignment of the load bars of the step b) is obtained by the displacement of the load bar of each screen (10-40) to a position determined in relation to a reference position (Rₙ) specific to each screen.

## Patentansprüche

1. Verfahren zur Konfiguration einer Gruppe von motorisierten Sichtblenden, wobei jede motorisierte Sichtblende (n, 10-40) eine Laststange (12-42) aufweist, die sich entlang eines definierten Wegs bewegt, **dadurch gekennzeichnet, dass** es einen Schritt (E250; E260; E430) umfasst, der darin besteht, für jede Sichtblende "n" der Gruppe einen Versatzparameter (Iₙ, Oₙ) zwischen einer ersten Bezugsposition (Rₙ, R) der Sichtblende und einer zweiten Bezugsposition (R, RBₙ) zu bestimmen, wobei eine der zwei Bezugspositionen eine den Sichtblenden der Gruppe gemeinsame Bezugsposition (R) ist.

2. Konfigurationsverfahren nach Anspruch 1, **dadurch gekennzeichnet, dass** jede Sichtblende (n, 10-40) der Gruppe mit einem Zählmittel (7ₙ) gekoppelt ist, das die relative Position der Laststange (12-42) in Bezug auf die erste Bezugsposition (Rₙ, R) jeder Sichtblende und in Bezug auf die zweite Bezugsposition (R, RBₙ) definiert.

3. Konfigurationsverfahren nach Anspruch 2, **dadurch gekennzeichnet, dass** die zweite Bezugsposition (R, Rbₙ) eine Einstellposition (RBₙ) des Zählmittels (7ₙ) jeder Sichtblende (n, 10-40) ist, und **dadurch**, dass die erste Bezugsposition die gemeinsame Bezugsposition (R) der Gruppe von Sichtblenden ist.

4. Konfigurationsverfahren nach einem der Ansprüche 1 oder 2, **dadurch gekennzeichnet, dass** die zweite Bezugsposition die gemeinsame Bezugsposition (R) der Gruppe von Sichtblenden ist.

5. Konfigurationsverfahren nach Anspruch 4, **dadurch gekennzeichnet, dass** die erste Bezugsposition (Rₙ) einer zu konfigurierenden Sichtblende (n, 10-40) eine obere Endposition (FcHₙ) dieser Sichtblende ist.

6. Konfigurationsverfahren nach einem der vorherigen Ansprüche, **dadurch gekennzeichnet, dass** es einen vorherigen Schritt (E510) umfasst, der darin besteht, eine Master-Sichtblende (10) für die Gruppe von Sichtblenden zu definieren, wobei diese Master-Sichtblende als Bezug für die Ausführung des Konfigurationsverfahrens dient.

7. Konfigurationsverfahren nach Anspruch 6, **dadurch gekennzeichnet, dass** die zweite Bezugsposition (R) die erste Bezugsposition (R₁) der Master-Sichtblende (10) ist.

8. Konfigurationsverfahren nach einem der vorherigen Ansprüche, **dadurch gekennzeichnet, dass** es mindestens die folgenden Grundschritte umfasst:
i) das Positionieren (E110) der Laststange (12) einer Sichtblende, die unter den Sichtblenden der Gruppe von Sichtblenden gewählt wird, an eine gemeinsame Bezugsposition (R) der Gruppe;
ii) das Speichern (E120) dieser gemeinsamen Bezugsposition (R);
iii) das Positionieren (E130) der Laststange der gewählten Sichtblende (10) in eine Konfigurationsposition, die einer bestimmten Position (B) der Laststangen der zu konfigurierenden Sichtblenden entspricht;
iv) das Speichern (E140) dieser Konfigurationsposition (B);
und, für jede Sichtblende der Gruppe,
v) das Positionieren (E230) der Laststange (12-42) der einzustellenden Sichtblende in die Konfigurationsposition (B) von Schritt iii);
vi) das Speichern (E240) dieser dritten Position (B'ₙ); und
vii) das Verwenden (E250; E260) dieser drei gespeicherten Positionen (R, B, B'ₙ), um den Versatzparameter (Iₙ, Oₙ) der zu konfigurierenden Sichtblende zu bestimmen.

9. Konfigurationsverfahren nach einem der Ansprüche 1 bis 7, **dadurch gekennzeichnet, dass** es mindestens die folgenden Grundschritte umfasst:
a) das Positionieren (E410) der Laststange einer gewählten Sichtblende (10) in eine Konfigurationsposition, die einer Bezugsposition (Rₙ) einer zu konfigurierenden Sichtblende entspricht;
b) das Speichern (E420) dieser Konfigurationsposition (Rₙ);
c) das Verwenden (E430) dieser Speicherung, um den Versatzparameter (Iₙ) der zu konfigurierenden Sichtblende zu bestimmen.

10. Verfahren zur Gruppensteuerung der Bewegung einer Gruppe von motorisierten Sichtblenden, die mindestens zwei motorisierte Sichtblenden (n, 10-40) umfasst und durch das
Verfahren nach einem der vorherigen Ansprüche konfiguriert wird, wobei jede Sichtblende der Gruppe eine Laststange (12-42) aufweist, die sich entlang eines definierten Wegs bewegt, **dadurch gekennzeichnet, dass** dieses Verfahren, um auf einen Steuerbefehl (E530) hin mindestens die Ausrichtung der bewegten Laststangen (12-52) zu erhalten, mindestens einen Versatzparameter (Iₙ, Oₙ) zwischen einer ersten Bezugsposition (Rₙ, R) einer der Sichtblenden und einer zweiten Bezugsposition (R, RBₙ) berücksichtigt, wobei eine der zwei Bezugspositionen eine den Sichtblenden der Gruppe gemeinsame Bezugsposition (R) ist.

11. Verfahren zur Gruppensteuerung nach Anspruch 10, **dadurch gekennzeichnet, dass** es mindestens die folgenden Schritte umfasst:
a) auf einen Bewegungsbefehl (E530) der Gruppe von Sichtblenden hin, das Bewegen (E540) mindestens einer Laststange (12-42) einer Sichtblende (n) der Gruppe; und
b) auf einen Stopbefehl (E550) hin, das Positionieren (E580) der Laststange jeder Sichtblende der Gruppe oder jeder Sichtblende, deren Laststange bewegt wurde, derart, dass mindestens die Ausrichtung der bewegten Laststangen erhalten wird.

12. Verfahren zur Gruppensteuerung nach Anspruch 11, **dadurch gekennzeichnet, dass** der Bewegungsbefehl (E530) von Schritt a) ein Befehl ist, der darauf abzielt, die Laststange (12-42) bis zu einer vordefinierten Position (B) zu bewegen, und **dadurch**, dass der Stopbefehl (E550) von Schritt b) dann automatisch ausgeführt wird, sobald die vordefinierte Position erreicht ist.

13. Verfahren zur Gruppensteuerung nach einem der Ansprüche 11 oder 12, **dadurch gekennzeichnet, dass** die Ausrichtung der Laststangen von Schritt b) erhalten wird, indem die Laststange jeder Sichtblende (10-40) bis zu einer Position bewegt wird, die in Bezug auf eine Bezugsposition (Rₙ) jeder Sichtblende bestimmt wird.
